# EUROPÄISCHE PATENTSCHRIFT

(11) **EP 3 289 849 B1**
(45) Veröffentlichungstag und Bekanntmachung des Hinweises auf die Patenterteilung: **20.03.2019**
(21) Anmeldenummer: 17401097.5
(22) Anmeldetag: 24.08.2017
(51) Int. Cl.: A01C 23/00, A01M 7/00

(54) **SCHLEPPSCHLAUCHANORDNUNG FÜR LANDWIRTSCHAFTLCHE VERTEILMASCHINEN ZUR AUSBRINGUNG VON FLÜSSIGKEITEN**
DRAG HOSE ASSEMBLY FOR AGRICULTURAL DISTRIBUTING MACHINES FOR THE APPLICATION OF LIQUIDS
DISPOSITIF DE TUYAU TRAÎNÉ POUR MACHINES AGRICOLES À DISTRIBUER DESTINÉ À ÉPANDRE LES LIQUIDES

(30) Priorität: 05.09.2016 DE 102016116522
(43) Veröffentlichungstag der Anmeldung: 07.03.2018
(73) Patentinhaber: Amazonen-Werke H. Dreyer GmbH & Co. KG, 49205 Hasbergen (DE)
(72) Erfinder: Klemann, Timo, 49191 Belm (DE); Oberheide, Friedrich, 49143 Bissendorf (DE); Dembeck, Achim, 49191 Belm (DE)

(56) Entgegenhaltungen:
- EP-A1- 2 705 750
- DE-A1- 4 123 790
- DE-U1- 29 611 254

## Beschreibung

Die Erfindung betrifft eine Schleppschlauchanordnung für landwirtschaftliche Verteilmaschinen zur Ausbringung von Flüssigkeiten gemäß des Oberbegriffes des Patentanspruches 1.

Eine derartige Schleppschlauchanordnung für landwirtschaftliche Verteilmaschinen zur Ausbringung von Flüssigkeiten ist in der DE 41 23 790 A1 beschrieben. Diese Schleppschläuche werden in der Praxis auch an Verteilerbalken, die in eine zumindest annähernd aufrechte Transportposition verbringbar sind, angeordnet, wie dieses in dem Amazone UX-Prospekt mit Druckvermerk MI5495 (de_DE) 10.15 auf Seite 42 abgebildet ist. Hier erkennt man, dass in der Transportposition, wenn der Verteilerbalken eingeklappt und in die aufrechte Transportposition gebracht ist, dass die Schleppschläuche trotz ihrer Flexibilität in einem großen Bogen in ihrem oberen Bereich abgeknickt sind und die Transportbreite der Maschine erheblich vergrößern.

Der Erfindung liegt die Aufgabe zu Grunde, in einfacher Weise für die Transportposition ein näher Heranbringen der Schleppschläuche an die aufrecht stehenden Transportbalken zur Verringerung der Transportbreite der Maschine zu ermöglichen.

Diese Aufgabe wird erfindungsgemäß dadurch gelöst, dass jeweils in dem Bereich der Verbindungsvorrichtung ein Knickgelenk in dem Schleppschlauch angeordnet ist, dass die jeweilige Gelenkachse des Knickgelenkes in Ausbringposition des Verteilerbalkens in Fahrtrichtung weist. Hierbei befindet sich das Knickgelenk zumindest annähernd in unmittelbarer Nähe der Unterseite des Verteilerbalkens.

Infolge dieser Maßnahmen kann der jeweilige Schleppschlauch über das Knickgelenk in dichter und unmittelbarer Nähe des Verteilerbalkens bei dessen aufrechter Transportposition nach unten abknicken, so dass der Schleppschlauch sich in unmittelbarer Nähe des aufrechten Verteilerbalkens befindet. Dies ergibt eine kompakte Zuordnung der Schleppschläuche zu den aufrecht stehenden Verteilerbalken in der Transportposition, so dass eine schmalere Transportposition erreicht wird.

Eine einfache Ausgestaltung für das Kniegelenk lässt sich dadurch erreichen, dass das jeweilige Knickgelenk aus zwei miteinander mittels eines Gelenkes schwenkbar miteinander verbundenen und in Längsrichtung der Schleppschläuche mit rohrartigen Aussparungen versehenen Gelenkteilen besteht.

Um zu erreichen, dass die Flüssigkeit von den Flüssigkeitauslässen der Zuleitung zu den Schleppschläuchen gelangt und andererseits das enge Abknicken der Schleppschläuchen im Bereich des jeweiligen Knickgelenkes gewährleistet ist, ist vorgesehen, dass in den rohrartigen Aussparungen der beiden Gelenkteile des Knickgelenkes ein weiches und leicht biegsames Schlauchstück in abgedichteter Weise eingesetzt ist.

Hierbei kann das leicht biegsame Schlauchstück als Wellrohr, Wellschlauch oder Silikonschlauch ausgebildet sein.

In vorteilhafterweise ist vorgesehen, dass der jeweilige Schleppschlauch mittels des Knickgelenkes aus seiner Ausbringposition zumindest annähernd um 90° in seine Transportposition verschwenkbar ist. Hierdurch wird das enge Heranbringen der Schleppschläuchen an den aufrecht stehenden Verteilerbalken in Transportposition erreicht.

Eine einfache Ausgestaltung und Integration des Knickgelenkes in den jeweiligen Schleppschlauch lässt sich dadurch erreichen, dass an dem einen Gelenkteil des Kickgelenkes die Verbindungsvorrichtung und an dem anderen Gelenkteil eine Schlauchtülle zur Anordnung des Schleppschlauches angeordnet ist.

Eine einfache Befestigung der Schleppschläuche an den Flüssigkeitauslässen der Zuleitung wird dadurch erreicht, dass die Verbindungsvorrichtung bajonettartig ausgestaltet ist.

Weitere Einzelheiten der Erfindung sind der Beispielsbeschreibung und den Zeichnungen zu entnehmen. Die Zeichnungen zeigen
- Fig.1: das als Verteilerbalken ausgebildete Spritzgestänge in Ausbringposition einer als Pflanzenschutzspritze ausgebildeten landwirtschaftlichen Verteilmaschine in Teilansicht mit einer in Teilbereichen des Verteilerbalkens angebauten Schleppschlauchanordnung mit Schleppschläuchen in der Ansicht von hinten,
- Fig.2: einen Schleppschlauch der Schleppschlauchanordnung gemäß Fig.1 in der Ansicht von hinten und im vergrößerten Maßstab,
- Fig. 3: das einem Schleppschlauch zu geordnete Knickgelenk gemäß Fig.1 und 2 in der Ansicht von rechts und im vergrößerten Maßstab,
- Fig.4: das einem Schleppschlauch zu geordnete Knickgelenk gemäß Fig. 3 in der Ansicht von hinten,
- Fig.5: das als Verteilerbalken ausgebildete Spritzgestänge in aufrechter Transportstellung einer als Pflanzenschutzspritze ausgebildeten landwirtschaftlichen Verteilmaschine in Teilansicht mit einer in Teilbereichen des Verteilerbalkens angebauten Schleppschlauchanordnung mit Schleppschläuchen in der Ansicht von hinten,
- Fig.6: einen Schleppschlauch der Schleppschlauchanordnung gemäß Fig.5 in der Ansicht von hinten und im vergrößerten Maßstab,
- Fig. 7: das einem Schleppschlauch zu geordnete Knickgelenk gemäß Fig.5 und 6 in der Ansicht von rechts und im vergrößerten Maßstab,
- Fig.8: das einem Schleppschlauch zu geordnete Knickgelenk gemäß Fig.7 im Schnitt VIII - VIII und
- Fig.9: das einem Schleppschlauch zu geordnete Knickgelenk gemäß Fig.7 im Schnitt IX - IX.

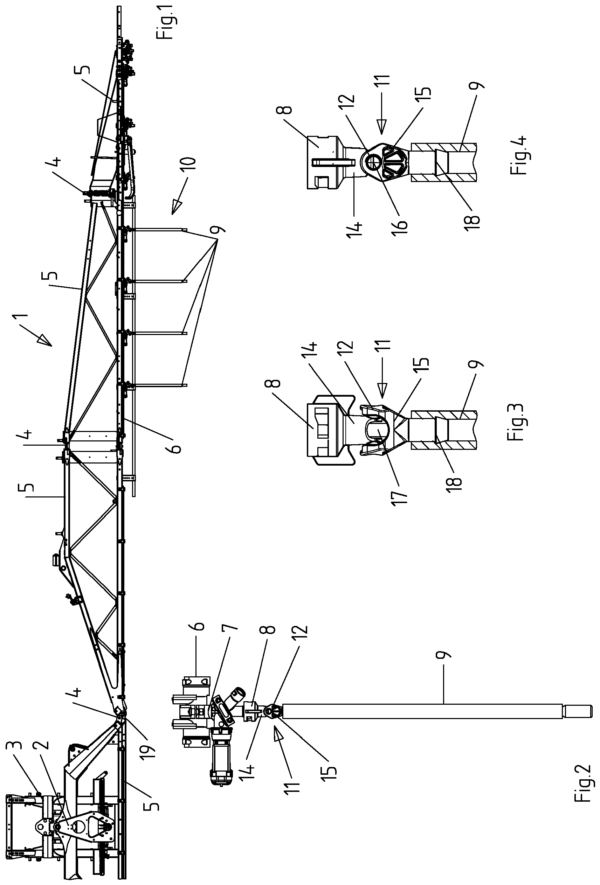

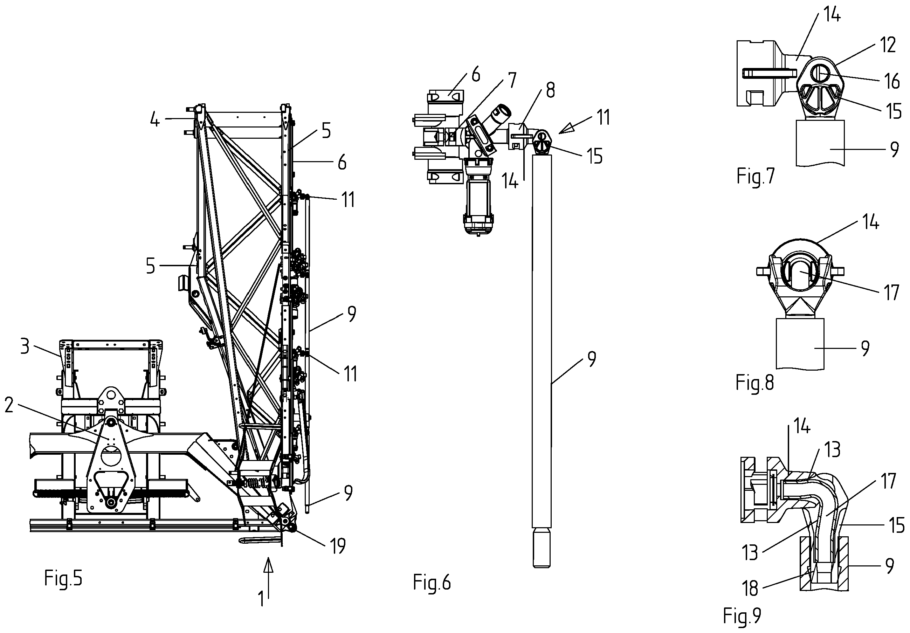

In der Fig. 1 ist das als Verteilerbalken 1 ausgebildete Spritzgestänge in Ausbringposition einer als Pflanzenschutzspritze ausgebildeten landwirtschaftlichen Verteilmaschine dargestellt. Der Verteilerbalken 1 ist mittels einer Aufhängevorrichtung 2 in bekannter Weise verschwenkbar und höhenverstellbar an einem an dem nicht dargestellten Rahmen einer Pflanzenschutzspritze angeordneten Zwischenrahmen 3 angeordnet. In der Fig.1 ist nur der rechte Teil des Verteilerbalkens 1 dargestellt. Der Verteilerbalken 1 besteht aus mehreren mittels Klappgelenken 4 miteinander verbundenen Sektionen 5. Der Verteilerbalken 1 kann aus der in Figur 1 dargestellten sich quer zur Fahrtrichtung in horizontaler Ausrichtung erstreckenden Ausbringposition in die in Fig.5, in der wiederum nur der rechte Teil des Verteilerbalkens 1 dargestellt ist, zusammengeklappte aufrechten Transportposition verbracht werden.

Auf der Unterseite des Verteilerbalkens 1 ist eine mit Flüssigkeit zu beaufschlagende Zuleitung 6 in bekannter Weise angeordnet. Dieser Zuleitung 6 werden in bekannter und daher nicht dargestellter Weise die auszubringenden Flüssigkeiten in dosierter Form zugeleitet. Die Zuleitung 6 weist in gleichmäßigen Abständen zueinander angeordnete Anschlusskupplungen 7 mit Flüssigkeitauslässen auf. An den Anschlusskupplung 7 der Flüssigkeitauslässe sind jeweils über Verbindungsvorrichtungen 8 jeweils Schleppschläuche 9 einer Schleppschlauchanordnung 10 zu befestigen. Die Anschlusskupplung 4 und die Verbindungsvorrichtung 8 sind bajonettartig ausgebildet. Somit können die Schleppschläuche 9 anstelle von Ausbringdüsen einfach an den jeweiligen Anschlusskupplungen 7 befestigt und gegeneinander ausgetauscht werden. In den Fig.1 und 5 sind der Übersichtlichkeit halber nur einige Schleppschläuchen 9 an den die Flüssigkeitauslässen aufweisende Anschlusskupplungen 7 des Verteilerbalkens 1 angeordnet. Selbstverständlich werden für das Ausbringen von Flüssigkeiten über Schleppschläuche 9 an allen Flüssigkeitauslässen aufweisende Anschlusskupplungen 7 des Verteilerbalkens 1 Schleppschläuche 9 angeordnet. Die Schleppschläuche 9 hängen in der Ausbringstellung des Spritzgestänges 1 von der Anschlusskupplung 7 zumindest annähernd senkrecht nach unten.

In dem Bereich der Verbindungsvorrichtung 8 ist jeweils ein Knickgelenk 11 in dem jeweiligen Schleppschlauch 9 in integrierter Weise angeordnet. Das jeweilige Knickgelenk 11 besteht aus zwei miteinander mittels eines Gelenkes 12 schwenkbar miteinander verbundenen und in Längsrichtung der Schleppschläuche 9 mit rohrartigen Aussparungen 13 versehenen Gelenkteilen 14 und 15. Die Gelenkachse 16 des Knickgelenkes 11 weist in Ausbringposition des Verteilerbalkens 1 in Fahrtrichtung. Hierdurch knickt das Knickgelenk 11 und somit der Schleppschlauch 9 während der Vorwärtsbewegung der Maschine nicht nach rückwärts ab.

In den rohrartigen Aussparungen 13 der beiden Gelenkteile 14 und 15 des Knickgelenkes 11 ist ein weiches und leicht biegsames Schlauchstück 17 in abgedichteter Weise eingesetzt ist. Dieses Schlauchstück 17 kann ein Wellrohr, Wellschlauch oder Silikonschlauch sein.

An dem oberen Gelenkteil 14 des Kickgelenkes 11 ist die bajonettartige Verbindungsvorrichtung 8 zur Anbringung an der den Flüssigkeitauslass aufweisenden Anschlusskupplung 7 der Zuleitung 6 und an dem unteren Gelenkteil 15 ist eine Schlauchtülle 18 zur Anordnung des Schleppschlauches 9 angeordnet. Der Schleppschlauch 9 kann in nicht dargestellter Weise mit einer Schlauchklemme auf der Schlauchtülle 18 gesichert sein.

Wenn die einzelnen Sektionen 5 des Verteilerbalkens 1 mittels der Klappgelenke 4 in bekannter Weise paketartig zueinander eingeklappt und die paketartig zueinander geklappten Sektionen 5 des Verteilerbalkens 1 anschließend noch um zumindest annähernd 90° um eine zumindest annähernd in Fahrtrichtung verlaufende Gelenkachse 19 in eine aufrechte Stellung, wie in Fig.5 dargestellt, in die Transportposition hoch geklappt sind, richten sich die einzelnen Schleppschläuche 9 aufgrund des Knickgelenkes 11 von der Verbindungsvorrichtung 8 aus nach unten hängend aus, wie die Fig. 5 und 6 zeigen. Hierzu ist der jeweilige Schleppschlauch 9 mittels des Knickgelenkes 11 aus seiner Ausbringposition gemäß Fig. 1 bis 4 zumindest annähernd um 90° in seine Transportposition gemäß Fig. 5 bis 9 verschwenkbar, wie die Zeichnungen zeigen.

Die Flexibilität und/oder Elastizität des weichen und leicht biegsamen Schlauchstückes 17, welches in den rohrartigen Aussparungen 13 der beiden Gelenkteile 14 und 15 des Knickgelenkes 11 eingesetzt ist, ist zumindest derartig ausgeprägt, dass das Knickgelenk 11 allein aufgrund der von der Masse des Schleppschlauches 9 ausgehenden Gewichtskraft, dass das Knickgelenk 11 aus seiner Ausbringposition gemäß Fig.1 bis 4 um zumindest annähernd 90° in die in den Fig. 5 bis 9 dargestellte Transportposition verschwenken kann.

## Patentansprüche

1. Schleppschlauchanordnung (10) für landwirtschaftliche Verteilmaschinen zur Ausbringung von Flüssigkeiten und zur Anbringung von vorzugsweise in sich flexiblen Schleppschläuchen (9) an einem in eine zumindest annähernd horizontale Ausrichtung in der Ausbringposition sich befindlichen und in zumindest eine zumindest annähernd aufrechte Transportposition verbringbaren Verteilerbalken (1), wobei die Schleppschläuche (9) jeweils mittels einer Verbindungsvorrichtung (8) an den Flüssigkeitsauslässen von zumindest einer an dem Verteilerbalken (1) angeordneten mit der auszubringenden Flüssigkeit beaufschlagten Zuleitung (6) angeschlossen sind, wobei die Schleppschläuche (9) in der aufrechten Transportposition des Verteilerbalkens (1) zumindest teilweise von der Verbindungsvorrichtung (8) aus nach unten hängend ausgerichtet sind, **dadurch gekennzeichnet, dass** jeweils in dem Bereich der Verbindungsvorrichtung (8) ein Knickgelenk (11) in dem Schleppschlauch (9) angeordnet ist, dass die jeweilige Gelenkachse (16) des Knickgelenkes (11) in Ausbringposition des Verteilerbalkens (1) in Fahrtrichtung weist.

2. Schleppschlauchanordnung nach Anspruch 1, **dadurch gekennzeichnet, dass** das jeweilige Knickgelenk (11) aus zwei miteinander mittels eines Gelenkes (12) schwenkbar miteinander verbundenen und in Längsrichtung der Schleppschläuche (9) mit rohrartigen Aussparungen (13) versehenen Gelenkteilen (14,15) besteht.

3. Schleppschlauchanordnung nach zumindest einem der vorstehenden Ansprüche, **dadurch gekennzeichnet, dass** in den rohrartigen Aussparungen (13) der beiden Gelenkteile (14,15) des Knickgelenkes (16) ein weiches und leicht biegsames Schlauchstück (17) in abgedichteter Weise eingesetzt ist.

4. Schleppschlauchanordnung nach Anspruch 3, **dadurch gekennzeichnet, dass** das Schlauchstück (17) ein Wellrohr, Wellschlauch oder Silikonschlauch ist.

5. Schleppschlauchanordnung nach zumindest einem der vorstehenden Ansprüche, **dadurch gekennzeichnet, dass** der jeweilige Schleppschlauch (9) mittels des Knickgelenkes (11) aus seiner Ausbringposition zumindest annähernd um 90° in seine Transportposition verschwenkbar ist.

6. Schleppschlauchanordnung nach Anspruch 1, **dadurch gekennzeichnet, dass** an dem einen Gelenkteil (14) des Knickgelenkes (11) die Verbindungsvorrichtung (8) und an dem anderen Gelenkteil (15) eine Schlauchtülle (18) zur Anordnung des Schleppschlauches (9) angeordnet ist.

7. Schleppschlauchanordnung nach zumindest einem der vorstehenden Ansprüche, **dadurch gekennzeichnet, dass** die Verbindungsvorrichtung (8) bajonettartig ausgestaltet ist.

## Claims

1. Drag-hose arrangement (10) for agricultural spreaders for dispensing liquids and for fitting preferably inherently flexible drag hoses (9) on a spreader boom (1), which in the dispensing position is located at least more or less horizontally and can be moved into at least one at least more or less upright transporting position, wherein the drag hoses (9) are connected, by means of a connecting device (8) in each case, to the liquid outlets of at least one supply line (6), which is arranged on the spreader boom (1) and carries the liquid which is to be dispensed, wherein, in the upright transporting position of the spreader boom (1), the drag hoses (9) hang downwards at least to some extent from the connecting device (8), **characterized in that** an articulated joint (11) is arranged in the drag hose (9) in each case in the region of the connecting device (8), and **in that**, in the dispensing position of the spreader boom (1), the respective pin (16) of the articulated joint (11) is oriented in the direction of travel.

2. Drag-hose arrangement according to Claim 1, **characterized in that** the respective articulated joint (11) comprises two joint parts (14, 15), which are connected to one another for pivoting action by means of a joint (12) and are provided with tubular apertures (13) in the longitudinal direction of the drag hoses (9) .

3. Drag-hose arrangement according to at least one of the two preceding claims, **characterized in that** a pliable and easy-to-flex piece of hose (17) is inserted in a sealed manner in the tubular apertures (13) of the two joint parts (14, 15) of the articulated joint (16).

4. Drag-hose arrangement according to Claim 3, **characterized in that** the piece of tube (17) is a corrugated tube, corrugated hose or silicone hose.

5. Drag-hose arrangement according to at least one of the preceding claims, **characterized in that** the respective drag hose (9) can be pivoted out of its dispensing position at least more or less through 90° into its transporting position by means of the articulated joint (11).

6. Drag-hose arrangement according to Claim 1, **characterized in that** the connecting device (8) is arranged on the one joint part (14) of the articulated joint (11) and a hose nozzle (18) on which to arrange the drag hose (9) is arranged on the other joint part (15) .

7. Drag-hose arrangement according to at least one of the preceding claims, **characterized in that** the connecting device (8) is of bayonet-like configuration.

## Revendications

1. Agencement de tuyaux traînés (10) pour machines agricoles de distribution pour l'épandage de liquide et pour le montage de tuyaux traînés (9) de préférence flexibles en soi sur une rampe de distribution (1) se trouvant dans une orientation au moins approximativement horizontale dans la position d'épandage et pouvant être amenée dans au moins une position de transport au moins approximativement redressée, les tuyaux traînés (9) étant raccordés à chaque fois au moyen d'un dispositif de raccordement (8) au niveau des sorties de liquide d'au moins une conduite d'alimentation (6) sollicitée avec le liquide à épandre et disposée au niveau de la rampe de distribution (1), les tuyaux traînés (9), dans la position de transport redressée de la rampe de distribution (1), étant orientées de manière suspendue vers la bas au moins en partie depuis le dispositif de raccordement (8), **caractérisé en ce qu'**une articulation à genouillère (11) est à chaque fois disposée dans le tuyau traîné (9) dans la région du dispositif de raccordement (8), **en ce que** l'axe d'articulation respectif (16) de l'articulation à genouillère (11) est orienté dans la position d'épandage de la rampe de distribution (1) dans la direction de conduite.

2. Agencement de tuyaux traînés selon la revendication 1, **caractérisé en ce que** l'articulation à genouillère respective (11) se compose de deux parties d'articulation (14, 15) raccordées l'une à l'autre de manière pivotante au moyen d'une articulation (12) et munies d'évidements de type tubulaire (13) dans la direction longitudinale des tuyaux traînés (9).

3. Agencement de tuyaux traînés selon au moins l'une quelconque des revendications précédentes, **caractérisé en ce que** dans les évidements de type tubulaire (13) des deux parties d'articulation (14, 15) de l'articulation à genouillère (16) est insérée, de manière étanche, une pièce tubulaire (17) souple et facilement flexible.

4. Agencement de tuyaux traînés selon la revendication 3, **caractérisé en ce que** la pièce tubulaire (17) est un tube ondulé, un tuyau ondulé ou un tuyau en silicone.

5. Agencement de tuyaux traînés selon au moins l'une quelconque des revendications précédentes, **caractérisé en ce que** le tuyau traîné respectif (9) peut pivoter au moyen de l'articulation à genouillère (11) de sa position d'épandage au moins approximativement de 90° dans sa position de transport.

6. Agencement de tuyaux traînés selon la revendication 1, **caractérisé en ce que** le dispositif de raccordement (8) est disposé au niveau de l'une des parties d'articulation (14) de l'articulation à genouillère (11) et une enveloppe tubulaire (18) pour recevoir le tuyau traîné (9) est disposée au niveau de l'autre partie d'articulation (15).

7. Agencement de tuyaux traînés selon au moins l'une quelconque des revendications précédentes, **caractérisé en ce que** le dispositif de raccordement (8) est configuré sous forme de baïonnette.
